**Europäisches Patentamt**

**European Patent Office**

**Office européen des brevets**

(11) Veröffentlichungsnummer: **0 209 512**
**A2**

# EUROPÄISCHE PATENTANMELDUNG

(21) Anmeldenummer: 86890173.7

(22) Anmeldetag: 11.06.86

(51) Int. Cl.⁴: **C 08 G 18/10**, C 08 G 18/69, C 08 L 75/04, C 09 J 5/00, B 60 C 1/00

(30) Priorität: 19.06.85 AT 1824/85

(71) Anmelder: **LIM Kunststoff-Technologie Gesellschaft m.b.H., A-2421 Kittsee (AT)**

(72) Erfinder: **Schmidt, Andreas, Dr., Hauergasse 12, A-2410 Hainburg (AT)**
Erfinder: **Schmidt, Oskar, Industriestrasse 3, A-2421 Kittsee (AT)**

(43) Veröffentlichungstag der Anmeldung: **21.01.87**
**Patentblatt 87/4**

(74) Vertreter: **Collin, Hans, Dipl.-Ing. Dr. et al, Patentanwälte Dipl.-Ing. Dr. Hans Collin Dipl.-Ing. Erwin Buresch Dipl.-Ing. Dr. Helmut Wildhack.Dipl.-Ing. Armin Häupl Mariahilfer Strasse 50, A-1070 Wien (AT)**

(84) Benannte Vertragsstaaten: BE CH DE FR GB IT LI LU NL SE

(54) **Mehrlagiger bzw. mehrschichtiger Verbundkörper, insbesondere Fahrzeugreifen, sowie Verfahren und Haftvermittlermasse zu seiner Herstellung.**

(57) Die Erfindung betrifft einen mehrlagigen bzw. mehrschichtigen Verbundkörper, insbesondere Fahrzeugreifen, bei dem mindestens eine erste Schicht oder Lage, insbesondere auf Polyurethanbasis, über eine Haftvermittlerschicht auf Polyurethanbasis an eine, vorzugsweise zumindest im wesentlichen polyurethanfreie, zweite Schicht oder Lage, insbesondere auf Polydienbasis, gebunden ist. Erfindungsgemäss ist vorgesehen, dass die Haftvermittlerschicht aus einem Polyenolpolyurethan, dessen Polyenolkomponente in bekannter Weise eine OH-Funktionalität von kleiner als 2,1, insbesondere von 1,7 bis 2,05, vorzugsweise von 1,9 bis 2,0, bei vorzugsweise endständigen Hydroxylgruppen aufweist, und/oder aus einem entsprechenden Polyenthiolpolyurethan, gebildet ist. Die Erfindung betrifft ferner ein Verfahren zur Herstellung des Verbundkörpers sowie eine Haftvermittler-Masse zur Durchführung des Verfahrens.

**Mehrlagiger bzw. mehrschichtiger Verbundkörper, insbesondere Fahrzeugreifen, sowie Verfahren und Haftvermittlermasse zu seiner Herstellung**

Die Erfindung betrifft einen mehrlagigen bzw. mehrschichtigen Verbundkörper, insbesondere Fahrzeugreifen, bei dem mindestens eine erste Schicht oder Lage, insbesondere auf Polyurethanbasis, über eine Haftvermittlerschicht auf Polyurethanbasis an eine, vorzugsweise zumindestens im wesentlichen polyurethanfreie, zweite Schicht oder Lage, insbesondere auf Polydienbasis, gebunden ist, ein Verfahren sowie eine Haftvermittlermasse zu seiner Herstellung.

Insbesondere betrifft die Erfindung gegebenenfalls runderneuerbare bzw. runderneuerte Fahrzeugreifen, Transportbänder, Treibriemen od.dgl.

Es ist schon seit längerem bekannt, daß Polyurethan-Kunststoffe, beispielsweise -Elastomere, ausgezeichnete mechanische Festigkeit, hohe Tragfähigkeit und gegebenenfalls Elastizität aufweisen, jedoch ihre Haftkraft gegenüber anderen Materialien den hohen, an Organe von Kraftübertragungs- und Transportsystemen, wie Treibriemen, Förderbänder, Fahrzeugketten, Fahrzeugreifen u.dgl., gestellten Anforderungen nicht gewachsen ist. Im Vergleich zu konventionellen Gummimischungen ist ihre Haftung z.B. auf nasser Straße nicht ausreichend, so daß Sicherheitsrisken bestehen. Es sind viele Versuche bekannt geworden, eine Lösung in der Richtung anzubieten, daß z.B. ein hochreißfestes Polyurethan-Grundmaterial mit einer zur Kraftübertragung, z.B. auf die Straße, ein zu förderndes Gut u.dgl. geeigneten, wesentlich haftfesteren Schicht mit einem der Polyurethan-Klasse nicht zurechenbaren Kunststoff bzw. Elastomer, z.B. auf Polydienbasis, durch Verbund kombiniert wird, wobei der erhaltene Verbundstoff die günstigen Eigenschaften von Polyurethan- und Nicht-Polyurethan-Kunststoff in sich vereinigen sollte.

So sind in der GB-PS 861 220 Verbundkörper aus einerseits polyester- bzw. polyesteramidhältigen Polyurethanen und anderseits Natur- oder synthetischem Gummi bzw. Thermoplastharzen beschrieben, die ohne Haftvermittler durch direktes Aufwalzen, Aufschmelzen oder anderes Auftragen der Polyurethankomponente hergestellt werden. Es hat sich aber gezeigt, daß dieses Verfahren nicht zur für bewegte und Biegungen ausgesetzte Verbundkörper nötigen Haftung zwischen den Lagen führt.

Um die Haftung innerhalb solcher Verbundstoffe zwischen den Lagen aus verschiedenen Kunststoffen sicherzustellen, sind verschiedene Vorschläge bekannt geworden, so z.B. der Einsatz von Isocyanat aufweisenden Adhäsiv-Mischungen mit Alkylnitriten bzw. Nitritestern von Carbaminsäure (US-PS 3 939 294), mit aliphatischen Nitroverbindungen (US-PS 3 880 808 und 3 916 072), mit aromatischen Nitroverbindungen (US-PS 3 880 810) und mit organischen Carbonsäuren (US-PS 3 806 486) als jeweils hafterhöhende Zusätze. Auch die Behandlung der aneinander zu bindenden Flächen mit UV-Strahlung ist bekannt. Die EP-A 101 660 empfiehlt den Einbau von Resorcin in eine haftfähige Gummimischung.

Für die haftfeste Anbringung von z.B. andersfärbigen Seitenwandelementen aus Polyurethan-Kunststoff an Reifen auf Basis üblicher, z.B. rußgefüllter Polydiene, ist vorgeschlagen worden, den Aminkatalysator in der Polyurethanmasse in Form eines Komplexsalzes mit anorganischen Salzen zur Wirkung in Richtung Haftungsverbesserung zu bringen (US-PS 4 029 730).

Zur Erreichung eines ähnlichen Zieles ist weiters versucht worden, auf einen üblichen Gummireifen eine Reaktions-Mischung eines Polyisocyanates mit einem Polyalkadienol mit einer Hydroxyl-Funktionalität von größer als 2 bis etwa 3 aufzubringen (US-PS 3 648 748), das Problem einer weiteren Verbindung mit einem üblichen Polyurethan-Kunststoff, insbesondere -Elastomer ist in dieser US-PS nicht angesprochen, außerdem sind Reifenwände wesentlich weniger hohen Scher-, Verschleiß- und Abriebkräften ausgesetzt als die Laufflächen bei der Aufbringung der Antriebskräfte eines Fahrzeuges auf die Straße.

Wie die Praxis gezeigt hat, sind jedoch alle bekannt gewordenen Lösungsansätze nicht ausreichend, die Haftung zwischen Polyurethan-Kunststoffmasse und von dieser verschiedenem Polymer, z.B. üblichem synthetischen Gummi, mit einem Wert zu erhalten, bei welchem die Bindung der verschiedenen Lagen auch den besonders hohen Scher- und Abreißkräften und den Verschleißbelastungen, wie sie bei industriellen Förderbändern, z.B. im Bergbau oder bei schnell drehenden bzw. schweren Kraftfahrzeugreifen auftreten, über längere Zeit standhalten kann.

- 3 -

Es bestand die Aufgabe, einen Verbundwerkstoff für Formkörper, insbesondere die schon mehrmals genannten Riemen, Bänder und Reifen od.dgl. zu schaffen, wobei mindestens ein Bestandteil des Werkstoffes durch einen Polyurethan-Kunststoff gebildet ist, welcher Werkstoff die erwähnten Nachteile nicht mehr aufweist und höchsten Beanspruchungen standhaltende Haftung der ihn aufbauenden und bildenden Lagen, Schichten, Teilkörper od.dgl. aneinander aufweist.

Ein Gegenstand der Erfindung ist somit ein Verbundwerkstoff bzw. Formkörper mit demselben, vorzugsweise, gegebenenfalls runderneuerbarer bzw. runderneuerter, Fahrzeugreifen, Transportband, Treibriemen od.dgl., wobei, vorzugsweise flächig, an eine bzw. einen, gegebenenfalls Füll-, Zusatz- und/oder Armierungsmittel aufweisende(n), Lage bzw. Körper mit bzw. aus Kunststoff, vorzugsweise Elastomer, insbesondere Gummi bzw. Kautschuk, auf Polyurethan-Basis, vorzugsweise an einen damit gebildeten Tragkörper eines Reifens, Transportbandes, Treibriemen od.dgl., eine Haftvermittlungs-Schicht auf Basis mindestens eines Isocyanates und Polyols gebunden ist, welche bevorzugt ihrerseits, vorzugsweise ebenfalls flächig, an eine bzw. einen, gegebenenfalls Füll-, Zusatz- und/oder Armierungsmittel aufweisende(n), Lage bzw. Körper aus bzw. mit einem von Polyurethan verschiedenen Polymer, vorzugsweise Elastomer, insbesondere synthetischer oder natürlicher Gummi auf Polydienbasis, vorzugsweise an eine(n) damit gebildete(n) Verschleiß- bzw. Haft- bzw. Verschleiß-Lage bzw. -Körper eines Reifens, Transportbandes, Treibriemens od.dgl. gebunden ist.

Der erfindungsgemäße Verbundkörper ist zur Lösung der obigen Aufgabe vor allem dadurch gekennzeichnet, daß die Haftvermittlerschicht aus einem Polyenolpolyurethan, dessen Polyenolkomponente in bekannter Weise eine OH-Funktionalität von kleiner als 2,1, insbesondere von 1,7 bis 2,05, vorzugsweise von 1,9 bis 2,0, bei vorzugsweise endständigen Hydroxylgruppen aufweist, und/oder aus einem entsprechenden Polyenthiolpolyurethan, gebildet ist.

Das erfindungsgemäße Verfahren zur Herstellung eines derartigen Verbundkörpers, insbesondere zur Herstellung oder Runderneuerung von Fahrzeugreifen, bei dem mindestens eine erste Schicht oder Lage, insbesondere auf Polyurethanbasis, über eine Haftvermittlerschicht auf Polyurethanbasis an eine, vorzugsweise zumindest im wesentlichen polyurethanfreie, zweite Schicht oder Lage, insbesondere auf Polydienbasis, gebunden wird, ist vor allem dadurch gekennzeichnet, daß man auf die Oberfläche der ersten zu verbindenden, gegebenenfalls vernetzbaren Schicht oder Lage, vorzugsweise auf Polyurethanbasis, eine Haftvermittlermischung aufbringt, die mindestens ein Polyenol bzw. -thiol mit einer bekannten OH-Funktionalität von kleiner 2,1, insbesondere von 1,7 bis 2,05, vorzugsweise von 1,9 bis 2,0, sowie mindestens ein Polyisocyanat, insbesondere ein Diisocyanat, und vorzugsweise einen Vernetzer und/oder Kettenverlängerer enthält, wobei die Polyenol/Isocyanatkomponente vorzugsweise als bekanntes Polyenolisocyanatpräpolymer vorliegt, sowie auf die Haftvermittlerschicht - gegebenenfalls nach einer Temperung und/oder einem Aufrauhen von deren Oberfläche - die zweite zu verbindende, gegebenenfalls vernetzbare, vorzugsweise polyurethanfreie Schicht oder Lage, insbesondere einen Kautschuk oder Gummi auf Polydienbasis, aufbringt und den so erhaltenen Verbundkörper, insbesondere bei Temperaturen unter 100°C, einem Härtungsvorgang unterwirft.

Die an die Lage bzw. den Körper aus bzw. mit einem Kunststoff, vorzugsweise Elastomer, auf Basis von Polyurethan hochhaftfest gebundene, vorzugsweise ihrerseits an eine(n) weitere(n) Lage bzw. Körper aus bzw. mit einem Polymeren, insbesondere Elastomeren, auf Basis eines Polydiens hochhaftfest gebundene, gegebenenfalls Armierungsmittel aufweisende, Haftvermittler-Schicht kann somit mit einer, gegebenenfalls molekularvernetzten, insbesondere vor- bzw. endvulkanisierten, gegebenenfalls Füll- und/oder Zusatzmittel, aufweisenden Mischung mit mindestens einem Polyen-Isocyanat, vorzugsweise Polyen-Isocyanat-Präpolymer, mit mindestens einem Polyen(thi)ol, vorzugsweise einem hydroxy-(SH)-terminierten Polyen(thi)ol mit einer OH-(SH-) Funktionalität von kleiner als 2,1, insbesondere von 1,7 bis 2,05, vorzugsweise von 1,9 bis 2,0, und mindestens einem Poly-, insbesondere Diisocyanat, sowie vorzugsweise mindestens einem Vulkanisiermittel und/oder Kettenverlängerer, vorzugsweise auf Aminbasis, gebildet sein.

Es hat sich bei Untersuchungen zur Haftungserhöhung zwischen den Lagen überraschend gezeigt, daß der Einsatz eines Polyenols mit einer im genannten Bereich liegenden Hydroxyl-Funktionalität in einer Haftvermittlungs-Schicht auf Isocyanatbasis eine unerwartet große Steigerung der Haftfestigkeit zwischen Polyurethan- und Nicht-Polyurethan-Kunststoffen mit sich bringt, welche das Vielfache jener Haftkraft beträgt, welche mit Polyenolen mit einer OH-(SH-) Funktionalität von größer als 2,1 erreichbar ist. Als Polyurethankunststoffe

- 5 -

sollen hier z.B. Poly(thio)äther- und/oder -ester-Urethane, gegebenenfalls auch Polyharnstoffe verstanden werden. Die OH-Gruppen in den Poly(en)olen der Grund- und/oder Haftlage können, wie schon angedeutet, also zumindest teilweise durch SH- oder $NH_2$-Gruppen ersetzt sein.

Ein Verfahren zur Herstellung von Polydien-Polyurethanen mit einer Vernetzungsdichte von < $4.10^{-5}$ Mol.$cm^{-3}$, bei dem Polydienglykole mit einer Funktionalität von 1,8 bis 2,1 eingesetzt werden, ist in der DE-OS 26 40 645 beschrieben. Die Reißfestigkeit dieser Produkte ist hervorgehoben, ebenfalls deren Anwendung u.a. als Reifenlaufflächen, Förder- und Antriebsbänder.

Erfindungsgemäß werden die Polyenol-Polyurethane, u.a. dieses Typs, als Haftvermittlerschicht bzw. Haftvermittlermasse zur Bildung von Verbundkörpern eingesetzt und ergeben überraschenderweise neben einer hohen Verbundfestigkeit auch eine hohe Haftkraft.

Weist, wie gemäß der Erfindung vorgesehen, der Formkörper auf einen Polyurethan-Grundkörper nur die neue Haftvermittlungs-Schichte z.B. im Präpolymer- oder Präcopolymer-Zustand auf, ist ein für die Runderneuerung schon vorbereiteter Rohreifen gegeben, auf dessen Haftvermittlungsschichte der Laufflächen- körper aufgebracht wird und es kann/alles z.B. in einem entsprechenden Formwerkzeug endvulkanisiert werden. Der Vorgang läuft entsprechend bei Ausbesserungsarbeiten bzw. Neubeschichtungen von Laufbändern od.dgl. ab. Beträgt die OH-Funktionalität des Poly(di)enols der Haftvermittlungsschicht unter 2,1 kommt eine festigkeits- und steifigkeitssteigernde Selbstvernetzung des Isocyanates zum Tragen. Bevorzugt wird Kalt-Aufvulkanisation der Gummi- bzw. Kautschuk-Lage erfolgen, wobei die Temperaturbelastung gering gehalten werden soll.

Hohen Traktions- und Scher- und Reißkräften können die neuen Werkstoffe, wie gefunden wurde, ausgesetzt werden, wenn in vorteilhafter Weise die Haftvermittlungs-Schicht mit einem Präpolymer mit mindestens einem hydroxyterminierten Polymer von gegebenenfalls alkyl- und/oder halogensubstituierten 1,3-Dien-Kohlenwasserstoffen mit 4-8, vorzugsweise 4-6, C-Atomen und/oder Copolymer solcher 1,3-Dien-Kohlenwasserstoffe mit Acrylaten oder Styrol und Poly-, insbesondere Diisocyanaten gebildet ist. Beispielhaft seien Isopren und Chloropren genannt.

- 6 -

Bekannte Technologie anwendbar und in den Kosten nicht aufwendig ist eine günstige Ausführungsvariante, die vorsieht, daß die Haftvermittlungs-Schicht mit einem Präpolymer von hydroxy-terminiertem 1,3-Butadien und/oder Isopren bzw. Chloropren mit den genannten Funktionalitäts-Werten und Poly-, insbesondere Diisocyanat gebildet ist.

Was den Isocyanatanteil der Haftvermittlungs-Schicht des neuen Verbundstoffes betrifft, ist es bevorzugt, wenn das Prä- oder Prä-Co-Polymer der Haftvermittlungs-Schicht mit 1,6-Hexamethylenisocyanat, 4,4'-Methylen-bis(cyclohexylisocyanat), 2,4- und/oder 2,6-Toluylendiisocyanat, Bis-toluylendiisocyanat, m-Phenylen- und p-Phenylendiisocyanat, gegebenenfalls hydriertem, Diphenylmethan-4,4'-diisocyanat, Isophorondiisocyanat. und/oder Naphthylidendiisocyanat, vorzugsweise mit 2,4-Toluylendiisocyanat, gebildet ist.

Dem Haftkraft-Transfer vom Polyurethan- zum Polydien-Kunststoff bzw. -Elastomer als besonders zuträglich erwiesen hat es sich, wenn das Prä- oder Prä-Co-Polymer der Haftvermittlungs-Schicht mindestens ein OH-(SH)-terminiertes Polyenol mit einer Funktionalität von kleiner als 2,1, insbesondere von 1,9 bis 2,0, und mindestens ein Diisocyanat im Molverhältnis von 1:1 bis 1:1,20, vorzugsweise von etwa 1:1,10, enthält.

Wenn, wie gemäß einer weiteren Ausführungsform vorgesehen, das Prä- oder Prä-Co-Polymer der Haftvermittlungsschicht, insbesondere Polyalkadien-Isocyanat, bevorzugt Polybutadien-Isocyanat, einen Gehalt von 2-5 %, vorzugsweise von etwa 3 % freie NCO-Gruppen, aufweist, ist die Haftschicht besonders günstig unter wesentlicher Erhöhung der Haftkraft zusammen mit den anderen Lagen end- bzw. ausvulkanisierbar.

Als Beispiele für die Vulkanisiermittel und/oder Kettenverlängerer auf Aminbasis werden 3,5-Diamino-4-chlor-/benzoesäure-(sec)-butylester und 3,3'-Dichlor-4,4'-diaminodiphenyl-methan (Moca) bzw. dessen Diäthylderivat genannt.

Die Herstellung der neuen Verbundwerkstoffe bzw. von Formkörpern daraus, wie insbesondere Reifen, ist nicht an die beschriebene Abfolge der Schritte gebunden, vielmehr kann je nach Zweckmäßigkeit die Schrittfolge geändert werden, z.B. kann in eine Form,an deren Innenwand anliegend der vorvulkanisierte Laufflächen-Gummi eingebracht und auf diesem die Haftvermittler-Ausgangsmischung aufgebracht worden ist, nach einem Vortempern mittels Spritzguß die Polyurethanmasse des Reifenkörpers eingebracht werden, wonach, gegebenenfalls sofort, die Endvulkanisation und Aushärtung zum fertigen Reifen erfolgt. Auch gleichzeitiges Spritzgießen zweier Lagen in einer Form kann erfolgen. Die Molekulargewichte der in den Haftvermittlungs-Schicht-Mischungen eingesetzten olefinische Doppelbindungen enthaltende Polyole können sich vorteilhaft im Bereich von etwa 1000 bis etwa 10000 bewegen.

Einen Rohling, auf welchen eine Nicht-Polyurethanlage, z.B. der Laufflächenkörper eines Reifens hochhaftfest aufvulkanisiert werden kann, kann man vorteilhaft mit einem Verfahren erzielen, bei dem vorgesehen ist, daß man zur Bildung eines Formkörpers die Innenfläche einer Form mit einer Schicht einer homogenisierten Mischung eines Polyen-Isocyanat-Präpolymers mit mindestens einem Polyenol, vorzugsweise einem hydroxy-terminierten Polyenol, mit einer OH-Funktionalität von kleiner als 2,1, insbesondere von 1,7 bis 2,05, vorzugsweise von 1,9 bis 2,0, und mindestens einem Poly-, insbesondere Diisocyanat, sowie vorzugsweise mindestens einem Vulkanisiermittel und/oder Kettenverlängerer, vorzugsweise auf Aminbasis, belegt bzw. bestreicht, und diese auf ihrer freien Seite mit, beispielsweise durch Spritzguß, eingebrach-tem, bevorzugt noch freie Isocyanatgruppen aufweisendem Polyisocyanat, beispielsweise auf Basis von linearem Polycaprolactonpolyol und 2,4-Toluylendiisocyanat, in Kontakt bringt, und gewünschtenfalls nachbehandelt, z.B. tempert.

Mit im wesentlichen jeweils ähnlichen Effekten, wie für die verschiedenen schon oben erwähnten Varianten der erfindungsgemäßen Verbundwerkstoffe und Formkörper daraus angegeben, können die beiden eben beschriebenen erfindungsgemäßen Herstellungsverfahren unter Einsatz der vorher jeweils schon näher angegebenen, bevorzugten Präpolymeren, Polyenole, Polyisocyanate, Amine u.dgl. variiert werden.

Schließlich ist weiterer wesentlicher Erfindungsgegenstand die neue Haftvermittlungsmasse, die zur Bildung der neuen, oben eingehend beschrie-benen Verbundwerkstoffe und von Formkörpern daraus dienen kann. Um unnötige Wiederholungen zu vermeiden, wird angeführt, daß sie dadurch gekennzeichnet ist, daß sie,gegebenenfalls Füll- und/oder Zusatzstoffe aufweisend, mit mindestens einem Polyen(thi)ol, vorzugsweise einem OH-(SH)-terminierten, insbesondere

- 8 -

konjugierte Doppelbindungen, bevorzugt 1,3-Dien-Bindungen aufweisenden Polyenol, mit einer Funktionalität von kleiner als 2,1, insbesondere von 1,7 bis 2,05, vorzugsweise von 1,9 bis 2,0, und mindestens einem Poly-, insbesondere Diisocyanat, sowie vorzugsweise mindestens einem Vulkanisiermittel und/oder Kettenverlängerer, vorzugsweise auf Aminbasis, gemäß einer der vorstehend eingehend erläuterten und mit Angabe von Effekten illustrierten Ausführungsvarianten gebildet ist.

Anhand des folgenden, einen Vergleich ermöglichenden Beispiels wird die Erfindung näher erläutert:

**Beispiel:**

560 g (0,2 Mol) eines hydroxyterminierten Polybutadiens (OH-Zahl 46,6, Funktionalität etwa 2,3) werden durch einstündiges Erhitzen auf 100°C unter vermindertem Druck von Feuchtigkeit befreit, anschließend auf 80°C abgekühlt und mit 76,6 g (0,22 Mol) 2,4-Toluylendiisocyanat versetzt. Dieses Gemisch wird unter Rühren 2 h auf 80°C gehalten. Es resultiert ein klares, zähflüssiges Polybutadienisocyanat mit einem Gehalt von 3,0 % an freien NCO-Gruppen.

200 Gew.-Teile des Polybutadienisocyanats werden bei 60°C mit 15,6 Gew.-Teilen geschmolzenem 3,5-Diamino-4-chlor-benzoesäure-(sec)-butylester intensiv durchmischt und mit diesem Gemisch eine teflonisierte Form innen überstrichen. Auf die noch nicht gehärtete Oberfläche gießt man ein Polycaprolactonisocyanat mit einem Gehalt von 3,57 % an freien NCO-Gruppen, hergestellt auf übliche Art aus 500 Gew.-Teilen linearem Polycaprolactonpolyol (OH-Zahl 56, Molekulargewicht 2000) und 87,1 Gew.-Teilen 2,4-Toluylendiisocyanat, das mit 3,5-Diamino-4-chloro-benzoesäure-(sec)butylester im Verhältnis 100:9,7 innigst vermischt wurde. Nach etwa 30 min kann entformt werden. Die Platte wird 5 h bei 100°C getempert, 2 Tage bei Raumtemperatur gelagert, die Polybutadienpolyurethanschicht leicht aufgerauht, teils abgedeckt und nach der üblichen Art der Kaltrunderneuerung von Fahrzeugreifen mit vorvulkanisiertem Laufflächengummi bei 98°C 4 h vulkanisiert. Man erhält so den Verbundstoff 1.

Ersetzt man im vorbeschriebenen Herstellungsverfahren, wie gemäß Erfindung vorgesehen, das hydroxyterminierte Polybutadien der OH-Funktionalität 2,3 durch eine äquivalente Menge eines solchen der Funktionalität 1,98, 1,95, 1,85, 1,7, so erhält man bei sonst identischem Verfahren die Verbundstoffe 2 bis 5.

<u>Testergebnisse:</u>

Aus den Verbundstoffen 1-5 stanzt man Prüflinge der Abmessungen 2 x 12 cm, erhitzt sie auf 70°C und prüft bei dieser Temperatur die Haftkraft in N/cm.

| Verbundstoff Nr. | Haftkraft, N/cm |
|---|---|
| 1 | 10 |
| 2 | 47 |
| 3 | 52 |
| 4 | 38 |
| 5 | 31 |

Wie aus diesem Vergleich ersichtlich, ist die Haftkraft der Verbundstoffe 2-5 um ein Vielfaches größer als die des Verbundstoffes 1.

Patentansprüche :

1. Mehrlagiger bzw. mehrschichtiger Verbundkörper, insbesondere Fahrzeugreifen, bei dem mindestens eine erste Schicht oder Lage, insbesondere auf Polyurethanbasis, über eine Haftvermittlerschicht auf Polyurethanbasis an eine, vorzugsweise zumindestens im wesentlichen polyurethanfreie, zweite Schicht oder Lage, insbesondere auf Polydienbasis, gebunden ist, dadurch gekennzeichnet, daß die Haftvermittlerschicht aus einem Polyenolpolyurethan, dessen Polyenolkomponente in bekannter Weise eine OH-Funktionalität von kleiner als 2,1, insbesondere von 1,7 bis 2,05, vorzugsweise von 1,9 bis 2,0, bei vorzugsweise endständigen Hydroxylgruppen aufweist, und/oder aus einem entsprechenden Polyenthiolpolyurethan, gebildet ist.

2. Verbundkörper nach Anspruch 1, dadurch gekennzeichnet, daß die Polyengruppierung der Polyenolkomponente aus einem Polymer von gegebenenfalls alkyl- und/oder halogensubstituierten 1,3-Dien-Kohlenwasserstoffen mit 4-8, vorzugsweise 4-6, C-Atomen und/oder einem Copolymer davon mit Acrylaten oder Styrol, insbesondere Poly-1,3-butadien, Chloropren und/oder Isopren gebildet ist.

3. Verbundkörper nach Anspruch 1 oder 2, dadurch gekennzeichnet, daß die Isocyanatkomponente der Haftvermittlerschicht aus 1,6-Hexamethylenisocyanat, 4,4'-Methylen-bis(cyclohexylisocyanat), 2,4- und/oder 2,6-Toluylendiisocyanat, Bistoluylendiisocyanat, m- und p-Phenylendiisocyanat, Naphthylidendiisocyanat, gegebenenfalls hydriertem, Diphenylmethan-4,4'-diisocyanat, Isophorondiisocyanat, vorzugsweise aus 2,4-Toluylendiisocyanat, gebildet ist.

4. Verbundkörper nach einem der Ansprüche 1 bis 3, dadurch gekennzeichnet, daß das Polyenolpolyurethan der Haftvermittlerschicht die Polyenolkomponente und die Isocyanatkomponente im Molverhältnis von 1:1 bis 1:1,20, vorzugsweise 1:1,10, enthält.

5. Verfahren zur Herstellung eines Verbundkörpers nach einem der Ansprüche 1 bis 4, insbesondere zur Herstellung oder Runderneuerung von Fahrzeugreifen, bei dem mindestens eine erste Schicht oder Lage, insbesondere auf Polyurethanbasis, über eine Haftvermittlerschicht auf Polyurethanbasis an eine, vorzugsweise zumindestens im wesentlichen polyurethanfreie, zweite Schicht oder Lage, insbesondere auf Polydienbasis, gebunden wird, dadurch gekennzeichnet, daß man auf die Oberfläche der ersten zu verbindenden, gegebenenfalls vernetzbaren Schicht oder Lage, vorzugsweise auf Polyurethan- basis, eine Haftvermittlermischung aufbringt, die mindestens ein Polyenol bzw. -thiol mit einer bekannten OH-Funktionalität von kleiner 2,1, insbesondere von 1,7 bis 2,05, vorzugsweise von 1,9 bis 2,0, sowie mindestens ein Polyisocyanat, insbesondere ein Diisocyanat, und vorzugsweise einen Vernetzer und/oder Kettenverlängerer enthält, wobei die Polyenol/Isocyanatkomponente vorzugsweise als bekanntes Polyenolisocyanatpräpolymer vorliegt, sowie auf die Haftvermittlerschicht - gegebenenfalls nach einer Temperung und/oder einem Aufrauhen von deren Oberfläche - die zweite zu verbindende, gegebenenfalls vernetzbare, vorzugsweise polyurethanfreie Schicht oder Lage, insbesondere einen Kautschuk oder Gummi auf Polydienbasis, aufbringt und den so erhaltenen Verbundkörper, insbesondere bei Temperaturen unter 100°C, einem Härtungsvorgang unterwirft.

6. Verfahren nach Anspruch 5, dadurch gekennzeichnet, daß man die Haftvermittlerschicht auf die Innenseite einer in eine Form eingelegten polyurethanfreien Schicht oder Lage aufbringt und daran eine Polyurethanschicht oder -lage anspritzt und anschließend den Härtungsvorgang durchführt.

7. Verfahren nach Anspruch 5 oder 6, dadurch gekennzeichnet, daß als Polyenol ein Polymer aus gegebenenfalls alkyl- und/oder halogensubstituierten 1,3-Dien- Kohlenwasserstoffen mit 4 bis 8, vorzugsweise 4 bis 6 C-Atomen, insbesondere von 1,3-Butadien, Chloropren oder Isopren, gegebenenfalls als Copolymer mit Acrylaten oder Styrol, eingesetzt wird.

8. Verfahren nach einem der Ansprüche 5 bis 7, dadurch gekennzeichnet, daß als Isocyanatkomponente der Haftvermittlermischung 1,6-Hexamethylenisocyanat, 4,4'-Methylen-bis(cyclohexylisocyanat), 2,4- und/oder 2,6-Toluylendiisocyanat, Bistoluylendiisocyanat, m- und p-Phenylendiisocyanat, Naphthylidendiisocyanat, gegebenenfalls hydriertes Diphenylmethan-4,4'-diisocyanat, Isophoróndiisocyanat, vorzugsweise 2,4-Toluylendiisocyanat, eingesetzt wird.

9. Verfahren nach einem der Ansprüche 5 bis 8, dadurch gekennzeichnet, daß in der Haftvermittlermasse die Polyenolkomponente und die Isocyanatkomponente im Molverhältnis von 1:1 bis 1:1,20, vorzugsweise 1:1,10, eingesetzt werden.

10. Verfahren nach einem der Ansprüche 5 bis 9, dadurch gekennzeichnet, daß in der Haftvermittlermasse ein Polyenolisocyanatpräpolymer mit einem Gehalt von 2 bis 5, vorzugsweise von etwa 3 %, an freien NCO-Gruppen eingesetzt wird.

11. Haftvermittlermasse auf Polyurethanbasis zur Bildung von Verbundkörpern nach einem der Ansprüche 1 bis 4, insbesondere nach einem Verfahren nach einem der Ansprüche 5 bis 10, die neben einer Polyisocyanatkomponente und vorzugsweise einem Vernetzer bzw. Kettenverlängerer, insbesondere auf Aminbasis, und gegebenenfalls üblichen Füll- bzw. Zusatzstoffen eine Polyolkomponente enthält, dadurch gekennzeichnet, daß die Polyolkomponente ein Polyenol bzw. -thiol ist, das in bekannter Weise eine OH-Funktionalität von kleiner als 2,1, insbesondere von 1,7 bis 2,05, vorzugsweise von 1,9 bis 2,0, aufweist.

12.Haftvermittlermasse nach Anspruch 11, dadurch gekennzeichnet, daß die Polyengruppierung der Polyenolkomponente aus einem Polymer von gegebenenfalls alkyl- und/oder halogensubstituierten 1,3-Dien-Kohlenwasserstoffen mit 4-8, vorzugsweise 4-6, C-Atomen und/oder einem Copolymer davon mit Acrylaten oder Styrol, insbesondere Poly-1,3-butadien, Chloropren und/oder Isopren gebildet ist.

13. Haftvermittlermasse nach Anspruch 11 oder 12, dadurch gekennzeichnet, daß die Isocyanatkomponente der Haftvermittlerschicht aus 1,6-Hexamethylenisocyanat, 4,4'-Methylen-bis(cyclohexylisocyanat), 2,4- und/oder 2,6-Toluylendiisocyanat, Bistoluylendiisocyanat, m- und p-Phenylendiisocyanat, Naphthyliden-diisocyanat, gegebenenfalls hydriertem, Diphenylmethan-4,4'-diisocyanat, Isophorondiisocyanat, vorzugsweise aus 2,4-Toluylendiisocyanat, gebildet ist.

14. Haftvermittlermasse nach einem der Ansprüche 11 bis 13, dadurch gekennzeichnet, daß das Polyenolpolyurethan der Haftvermittlerschicht die Polyenolkomponente und die Isocyanatkomponente im Molverhältnis von 1:1 bis 1:1,20, vorzugsweise 1:1,10, enthält.

15. Haftvermittlermasse nach einem der Ansprüche 11 bis 14, dadurch gekennzeichnet, daß sie ein Polyenolisocyanatpräpolymer mit einem Gehalt von 2 bis 5, vorzugsweise von etwa 3 %, an freien NCO-Gruppen enthält.